# Europäisches Patentamt
# European Patent Office
# Office européen des brevets

(19)

(11) Numéro de publication: **0 147 349**
**B1**

(12)

# FASCICULE DE BREVET EUROPÉEN

(45) Date de publication du fascicule du brevet:
**19.04.89**

(21) Numéro de dépôt: **84450031.4**

(22) Date de dépôt: **21.12.84**

(51) Int. Cl.⁴: **A 01 G 9/10**, A 01 G 31/02, C 05 F 11/02

(54) **Nouveau milieu de culture pour plantes.**

(30) Priorité: **22.12.83 FR 8320746**

(43) Date de publication de la demande:
**03.07.85 Bulletin 85/27**

(45) Mention de la délivrance du brevet:
**19.04.89 Bulletin 89/16**

(84) Etats contractants désignés:
**AT BE CH DE FR GB IT LI LU NL SE**

(56) Documents cité:
**CH-A-408 519**
**DE-A-2 230 503**
**FR-A-1 202 906**
**FR-A-2 248 780**

(73) Titulaire: **SOCIETE FERTIL'AQUITAINE (Société Anonyme), Chateau d'Aroze, F-33720 Landiras (FR)**
Titulaire: **Garnier née Piozin, Marie- France, La Jallière - Le Pian Médoc, F-33290 Blanquefort (FR)**
Titulaire: **Courtabessis née Lacassagne, Marie-Madeleine, Chateau d'Aroze, F-33720 Landiras (FR)**

(72) Inventeur: **Courtabessis née Lacassagne M.M, Château d'Aroze, F-33720 Landiras (FR)**
Inventeur: **Garnier née Piozin, Marie- France, La Jallière Le Pian Médoc, F-33290 Blanquefort (FR)**

(74) Mandataire: **Thébault, Jean- Louis, Cabinet Thébault S.A. 50 Cours de Verdun, F-33000 Bordeaux (FR)**

**Description**

La présente invention à trait a un nouveau milieu de culture pour plantes plus particulièrement destiné à la culture hors-sol ainsi qu'à la culture "in vitro".

La culture hors-sol, et plus précisément la culture sur supports inorganiques, est couramment pratiquée maintenant à partir d'un très grand nombre de matériaux ou substrats constitués de ou à partir de: matières plastiques, tourbe blonde ou brune, sables, argiles expansées, vermiculite, perlite, pouzzolanes, compost d'ordures ménagères, boues résiduaires, fumiers de tous types, écorces, sciures, copeaux, graviers, goémons, etc...

Ces divers types de substrat doivent présenter des qualités physiques bien précises ainsi que certaines propriétés chimiques et biologiques.

Le volume de substrat étant réduit, la densité des racines est importante et le système racinaire occupe parfois jusqu'à 10 % du volume total. Le support de culture doit permettre le fonctionnement de ce système et notamment l'absorption par celui-ci de l'eau et de l'oxygène. Ces circulations nécessaires de l'air et de l'eau ne peuvent s'effectuer qu'en présence d'une bonne stabilité structurale. Le substrat doit posséder des qualités d'imputrescibilité, de résistance à l'action du temps et de l'eau et donc de tenue mécanique à l'état humide.

Le substrat doit posséder une certaine porosité, et en particulier la macroporosité est importante pour une bonne circulation de l'air et une diffusion aisée de la solution fertilisante ou nutritive. On considère à ce propos qu'un volume lacunaire idéal serait de l'ordre de 60 à 70 % du volume du substrat. Cela détermine une granulométrie appropriée qui se situe entre 2 et 6 mm pour les matériaux compacts et 2 à 15 mm pour les matériaux poreux. On évite ainsi, d'une part, une certaine asphyxie racinaire, et, d'autre part, une aération trop importante facilitant le dessèchement.

La capacite de rétention en eau du substrat doit, en effet, être bonne pour maintenir une certaine humidité et éviter les irrigations trop fréquentes.

En ce qui concerne les propriétés chimiques demandées à ces types de substrat, il faut noter une capacité d'échange des bases élevée afin de limiter le lessivage et surtout un certain pouvoir tampon destiné à diminuer les variations de salinité dans le milieu.

Par ailleurs, le pH doit être compatible avec la croissance des végétaux et, à cet égard, un pH acide est nettement préférable, l'optimum se situant entre 5,5 et 6,2.

Quant à la richesse éventuelle en éléments minéraux et en oligo-éléments, elle n'est pas importante dans la mesure où on la corrige facilement par une fumure de fond et/ou l'utilisation ultérieure de solutions nutritives.

Enfin, le support de culture ne doit pas présenter de phytotoxicité.

En dernier lieu, au plan des propriétés biologiques le substrat doit être exempt de tout parasite végétal et, lorsqu'il est composé de produits organiques (tourbes, écorces, copeaux), posséder une constitution qui ne favorise pas le développement des micro-organismes.

En outre, il est intéressant, en cours de culture, que le substrat offre une résistance à la colonisation en surface par les algues ou les moisissures.

Enfin, le substrat doit être pauvre en graines adventices ou, mieux, exempt de ces dernières. A la suite des nombreuses tentatives qui ont été faites sur toutes sortes de types de substrat pour cultures hors-sol, il s'est révélé qu'aucun substrat utilisé ou expérimenté jusqu'à maintenant ne présentait dans son état propre la structure physique optimale requise ni, la plupart du temps, les propriétés chimiques et biologiques souhaitées.

Si ces propriétés chimiques et biologiques peuvent être relativement facilement conférées au matériau du substrat, par amendement ou apport par voie liquide, par contre, pour donner à ce matériau les propriétés physiques requises, il faut lui faire subir divers traitements, selon le type de matériau, en vue de lui conférer les caractéristiques structurelles nécessaires

La présente invention permet de pallier ces divers inconvénients et d'éliminer ces diverses contraintes en proposant un nouveau matériau propre à constituer, même à l'état brut, un substrat idéal non seulement pour la culture hors-sol mais également pour la culture "in vitro", malgré les exigences et contraintes beaucoup plus sévères que l'on rencontre dans ce type de culture, comme on le verra plus loin dans la description qui va suivre de l'objet de l'invention.

L'invention a pour objet l'utilisation comme milieu de culture pour plantes de fibres de bois obtenues par un traitement connu en soi consistant à cuire à la vapeur d'eau des copeaux de bois, puis à les défibrer en présence de vapeur d'eau sous pression et, enfin, à égoutter le mélange eau-fibres ainsi obtenu, lesdites fibres de bois étant formées de filaments ou fibrilles individuels, foisonnants, non agglomerés ni compressés.

Un tel milieu se révèle, de manière tout à fait inattendue et surprenante, être un support de culture répondant parfaitement aux diverses conditions exigées d'un substrat pour culture hors-sol et rappelées plus haut.

Tous les substrats connus à ce jour à base de bois sous une forme ou une autre n'ont jamais pu être utilisés tels quels et ont dû, à des degrés divers, être traités chimiquement ou physiquement en vue d'avoir une structure propre à remplir les conditions rappelées ci-dessus à savoir:

-capacité de rétention en air et en eau élevée;
-stabilité structurale inaltérable;
-capacité d'échange de bases (T) élevée;

2

-pouvoir tampon élevé;
-répartition: volume lacunaire total 75 % pour un volume solide de 25 %.

En outre, ces divers substrats doivent être traités pour avoir les propriétés chimiques et biologiques requises en particulier le pH approprié, l'absence de phytotoxicité, la résistance au développement des micro-roganismes.

A titre d'exemples de substrats connus à base de bois on peut citer les granofibres décrites en particulier dans le document FR-A-2 248 780. Les granofibres sont des granulés de fibres de bois obtenues par voie sèche, notamment par le procédé SEBREG, et dont le diamètre varie de 1 à 2 mm, jusqu'à plus de 10 mm selon la nature des fibres. Si ce substrat présente de bonnes structure, porosité et capacité de rétention de l'eau, son manque de stabilité biochimique se traduit par une dégradation faisant apparaître des produits de décomposition nocifs pour les cultures.

On peut citer également les sciures de bois dont l'inconvénient majeur est leur fermentation rapide les rendant phytotoxiques.

Les écorces broyées, en particulier de pin maritime, sont aussi utilisées comme substrat mais en mélange avec d'autres matières telles que des tourbes car elles n'ont pas en elles-mêmes les capacités de rétention d'eau et de réhumectation requises.

On connaît également les fibres polymérisées, décrites en particulier dans le brevet GB-A-1 134 465, et qui sont des fibres de cellulose polymérisées pour en améliorer les qualités physiques, chimiques et biologiques. Il s'agit donc de fibres de bois modifiées car ayant subi non seulement un traitement physique mais aussi un traitement chimique.

On peut, enfin, citer les fibres compostées qui sont en général des déchets de fibres de bois compressées utilisées sous forme de compost. Ce milieu ne présente pas non plus toutes les qualités requises et en particulier la non phytotoxicité.

Le matériau selon l'invention présente à l'état brut toutes ces propriétés réunies mais qui n'ont jamais été mises en évidence auparavant, ces propriétés résultant, d'une part, de la nature physique et chimique desdites fibres et, d'autre part, de la nature des traitements physiques et chimiques subis par le matériau de départ au cours de la fabrication de ces fibres.

Les fibres selon l'invention sont réalisées par défibrage de bois de résineux ou de feuillus.

Plus précisément on obtient ces fibres à partir de copeaux cuits à la vapeur et défibrés en présence de vapeur d'eau sous pression, le mélange eau-fibre étant ensuite égoutté.

Une telle technique de défibrage peut être par exemple celle mise en oeuvre dans le processus de fabrication des panneaux de fibres de bois agglomérées.

Ce processus, qui est parfaitement connu, consiste à hâcher en copeaux de quelques centimètres carrés des déchets par exemple de pin maritime (déchets constitués notamment par des dosses ou des délignures écorcées). Après élimination des fines par soufflerie, ces copeaux sont ensuite préchauffés et cuits à la vapeur par exemple entre 6 bars (température environ 150°C) et 12 bars (température environ 180°C) durant 3 à 7 minutes environ.

Ensuite, on procède à un défibrage des copeaux (rendus très friables par la cuisson) dans un défibreur constitué par exemple d'un disque stator et d'un disque rotor tournant à grande vitesse et alimenté en vapeur d'eau sous pression.

Le mélange eau-fibre provenant du défibreur est égoutté, ce qui permet d'obtenir des fibres de bois qui seront ensuite, dans le processus normal de fabrication des panneaux de fibres, soumis à compression et chauffage après raffinage.

Ces fibres de bois telles qu'elles sortent du défibreur conviennent parfaitement à l'application selon l'invention comme substrat de culture, sans aucun traitement complémentaire ou préparatoire.

Ces fibres se présentent sous forme de filaments ou fibrilles individuels foisonnants, non agglomérés ni compressés, d'un diamètre de l'ordre de quelques centièmes de millimètres et de longueur de l'ordre du millimètre environ pour le bois de feuillus, jusqu'à 5 mm environ pour le bois de résineux.

Les filaments de résineux sont plus flexibles et peuvent donc être plus longues que celles de feuillus.

Toutes les parties de feuillus ou résineux peuvent être utilisées pour la fabrication des fibres, cependant certaines écorces, telles que celles de résineux, ne sont pratiquement pas utilisables, car à cause de leur friabilité il y aura au cours de la fabrication des fibres énormément de poussières et peu de fibres, ce qui donne un rendement faible inintéressant.

Les fibres ainsi obtenues par défibrage (suivant par exemple la technique utilisée dans les panneaux de fibres agglomérées ou une autre technique) comprennent environ 99 % de matières organiques (surtout de la cellulose et de la lignine en quantité sensiblement égale, mais aussi des tanins, pectine, amidon, résines, etc...), et des sels minéraux.

Dans le tableau 1 ci-après on a résumé les caractéristiques physiques et chimiques principales du substrat réalisé avec de telles fibres. La colonne "valeurs moyennes" correspond à des échantillons moyens cependant que la colonne "valeurs extrêmes" correspond aux écarts que peuvent présenter certains paramètres du substrat selon l'invention, sans qu'il perde ses qualités essentielles, selon les utilisations envisagées, ces écarts dépendant, entre autres, de l'essence de bois utilisée, du tassement des fibres, des conditions atmosphériques, des conditions du défibrage etc... Il est à noter que ces valeurs dites extrêmes sont simplement indicatives et ne sont pas des limites absolues au-delà desquelles les fibres perdraient brusquement leurs propriétés.

EP 0 147 349 B1

**TABLEAU 1**

| Paramètres | Valeurs moyennes | Valeurs extrêmes |
|---|---|---|
| Densité sèche (à 40 % d'humidité) | 0,070 | 0,05 - 0,15 |
| Matière sèche (exprimée en pourcentage en masse du produit brut) | 55 % | 50 % - 70 % |
| Matière organique (% en masse du produit sec) | 98 % | 95 % - 99 % |
| Teneur en cendres (% du produit sec) | 2 % | 1 % - 5 % |
| pH ($H_2O$) | 4,5 | 4 - 5,5 |
| Conductivité électrique | 0,11 mS | |
| Salinité totale (mg/litre en substrat) | 150 - 170 mg | |
| Rétention de l'eau (exprimée en pourcentage en masse du produit sec) | 600 % | 550 % - 800 % |
| Disponibilité de l'eau (pF1- pF2) (1/kg produit sec) | 3 - 4 | |
| Porosité (exprimée en pourcentage en volume du produit brut) | 95 % | 70 % - 98 % |
| Teneur en eau à pF1 (exprimée en pourcentage en volume du produit brut) | 35 % | 30 % - 40 % |
| Teneur en air à pF1 (exprimée en pourcentage en volume du produit brut) | 60 % | 55 % - 70 % |

Des analyses de fibres selon l'invention ont donné par ailleurs des teneurs en éléments solubles à l'eau tout à fait comparables à celles obtenues avec les tourbes blondes non fertilisées ni chaulées.

Les fibres sont très homogènes au plan macroscopique du fait de la parfaite maîtrise des paramètres du défibrage.

Au plan microscopique elles peuvent être hétérogènes quant à la dimenson des fibres. Cette hetérogénéité varie principalement suivant le serrage des disques du défibreur. La pression de vapeur et la durée du prétraitement des copeaux à la vapeur (et corrélativement la température) sont d'autres moyens influençant la qualité du défibrage.

Les fibres sont souples, ont relativement peu de consistance et manquent de tenue: elles se comportent comme du coton.

Des essais ont été faits avec des fibres issues du défibrage du tronc de pin maritime après écorçage. A la sortie du défibreur ces fibres ont une couleur blond-jaune paille. Au stockage et au contact avec l'air libre la couleur vire légèrement au blond-havane. En cours de culture, la couleur fonce progressivement vers un brun-roux.

La densité des fibres dépend énormément des paramètres du défibrage, c'est-à-dire de la pression de la vapeur et du serrage des disques du défibreur. Pour une même pression de vapeur la densité sèche croît lorsque le serrage des disques décroît.

Soumise à des vibrations et pressions les fibres se compriment très bien. Cette aptitude au tassement facilite le transport et le stockage et permet par foisonnement de donner aux fibres, au niveau de l'utilisation, le volume désiré. La perte de volume au tassement peut varier, à titre indicatif, entre 25 % et 40 % selon les paramètres du défibrage.

A titre de comparaison on a indiqué dans le tableau 2 ci-après les capacités de rétention en eau des fibres conformes à l'invention, d'une part, et de substrats voisins constitués par des écorces compostées (ou broyées) et de la tourbe blonde (fine ou grossière).

Dans les tests illustrés par ce tableau 2 on a mesuré la quantité maximale d'eau que peut retenir un substrat placé dans les conditions d'après rempotage.

On obtient ainsi la quantité d'eau contenue par un pot après arrosage et écoulement de l'eau non retenue (percolation).

**Tableau 2**

| Matériau | Capacité de rétention en eau | | Densité sèche |
|---|---|---|---|
| | par litre de substrat | en % de matière sèche | |
| Fibre | 820 )<br>) → 795<br>770 ) | 790 | 0,104 )<br>) → 0,10<br>0,098 ) |
| Ecorces compostées broyées pour mémoire | 730 )<br>) → 745<br>760 ) | 325 | 0,23 )<br>→ 0,23<br>0,23 ) |
| Tourbe blonde: | | | |
| . fine | 800 à 900 | 700 à 1.500 | 0,06 à 0,12 |
| . grossière | 700 à 800 | 600 à 1.000 | 0,06 à 0,12 |

D'après le tableau 2 on constate que la fibre a une capacité de rétention en eau identique à celle d'une tourbe blonde moyenne, c'est-à-dire de la plupart des tourbes que l'on rencontre. Il est important de noter que cette rétention varie suivant les conditions de fabrication et qu'un défibrage poussé, et a fortiori un raffinage de la fibre (défibrage complémentaire), augmente très sensiblement la rétention en eau.

Il en est de même pour la densité sèche, laquelle, dans le tableau 2, est exprimée pour un taux d'humidité de 50 % environ.

Cette mesure de la capacité maximale de rétention en eau n'est toutefois pas suffisante pour connaître la manière dont devront être opérés les arrosages des substrats. Il conviendra donc de déterminer la force de rétention en eau, ce qui s'opère par la mesure de la quantité d'eau retenue à différentes forces de succion.

En ce qui concerne la perméabilité des substrats étudiés dans le tableau 2, celle-ci a été obtenue par percolation après tassements standards.

Les résultats exprimés en cm³ d'eau par tube de percolation sont regroupés dans le tableau 3 ci-après:

**Tableau 3**

| Matériau | Perméabilité (cm³ d'eau) | Observations |
|---|---|---|
| Fibre | 500 | élevée |
| Ecorces compostées broyées pour mémoire | 77 | correcte |
| Tourbe blonde: | | |
| . fine | 20 | faible |
| . grossière | 200 à 300 | bonne |

On constate que la perméabilité de la fibre est excellente.

En conclusion, la fibre selon l'invention est très perméable et possède une capacité de rétention en eau très satisfaisante. Il est à signaler également que cette fibre est remouillable à souhait et ne présente pas de limite de mouillabilité contrairement à la tourbe.

Le tableau 4 ci-après donne les résultats de tests de dessication complète et réhumectation de fibres (pression de vapeur et serrage des disques du défibreur maximaux) provenant du défibrage de pin maritime et de divers autres substrats.

**Tableau 4**

| | Rétrécissement en % du volume initial (1) | | Humidité en % du poids sec (2) | | Coefficient d'irreversibilité (3) | Intérêt agronomique |
|---|---|---|---|---|---|---|
| | $R_1$ | $R_2$ | $H_0$ | $H_2$ | | |
| Fibre | 33 | 18 | 675 | 620 | - 8 % | + + + + |
| Tourbe finlandaise à fibres assez fines | 38 | 18 | 1290 | 960 | - 26 % | + + |
| Tourbe russe fine | 34 | 14 | 1050 | 880 | - 16 % | + + + |
| Tourbe noire française | 88 | 75 | 945 | 190 | - 80 % | 0 |
| Terreau | 81 | 63 | 910 | 300 | - 67 % | + |

(1)    $R_1$: perte de volume après le premier séchage total
        $R_2$: perte de volume après le deuxième séchage total
(2)    $H_0$: humidité initiale
        $H_2$: humidité après la première réhumectation
(3)    $\frac{H_0 - H_2}{H_0} \times 100$

Le tableau ci-dessus montre un excellent comportement à la réhumectation de la fibre qui est supérieure à tous les substrats organiques connus.

Enfin, la fibre est remarquablement aérée (60 à 75 % d'air) comme l'indique le tableau 5 ci-après, et présente sur ce point des qualités bien supérieures à celles de toutes les tourbes et tous les autres substrats connus pour leur aération (pouzzolane 50 à 55 %; argile expansée grossière; 35 à 40 %; perlite: 50 %).

| Nature du produit | Porosité totale | Solide | Air | Eau | Risque Asphyxie |
|---|---|---|---|---|---|
| Fibre (pin maritime) | 95 | 5 | 60 - 75 | 20 - 35 | 0 |
| Tourbe noire | 94 | 6 | 7 | 87 | + + + |
| Tourbe blonde: . à fibres fines | 98 | 2 | 9 - 12 | 86 - 89 | + + |
| . à fibres grossières | 95 - 97 | 3 - 5 | 34 - 36 | 61 - 65 | + |
| Ecorce de pin maritime | 86 | 14 | 50 - 55 | 30 - 35 | 0 |

(Les valeurs indiquées sont en % du volume apparent, produit ressuyé).

Le matériau selon l'invention s'est révélé être de manière particulièrement surprenante et efficace un substrat idéal, utilisé à l'état brut, pour les cultures in vitro.

Ces cultures consistent à reproduire un même végétal en un nombre d'exemplaires très important à partir d'un même tissu, le méristème, qui est un tissu végétal jeune en cours de multiplication rapide.

Les méristèmes occupent "les points végétatifs" de la plante: extrémité de la tige, région subterminale de la racine, bourgeons. Leurs cellules polyédriques aux structures presqu'embryonnaires engendrent les diverses formations primaires et secondaires du végétal.

Une autre technique plus rapide consiste à opérer une multiplication du végétal par "microbouturage" en faisant pousser soit le bourgeon terminal soit les bourgeons axillaires et en resectionnant le végétal par entre-noeud.

On distingue deux phases principales qui se déroulent en milieu stérile. La première comprend une ou plusieurs séquences de 4 à 6 semaines en milieu gélosé: c'est la phase de multiplication. La seconde dure 3 à 5 semaines en milieu gélosé: c'est la phase d'enracinement.

On a utilisé à titre d'essai le milieu selon l'invention lors du passage au milieu d'enracinement.

Diverses espèces végétales ont été expérimentées, à savoir: le pommier, la vigne, le rosier, l'oeillet, le tabac et le dahlia.

EP 0 147 349 B1

Après quatre semaines passées en milieu gélosé en phase de multiplication, les végétaux sont jusqu'à maintenant transplantés en milieu gélosé pour la phase d'enracinement, ce qui ne va pas sans problèmes (sortie de tubes, dommages au système racinaire de par la mise à nu des racines, du fait de la nécessité d'éliminer la gélose).

La fibre selon l'invention paraît avantageusement, et de manière inattendue, tout à fait adaptée à la confection de ces milieux de culture, c'est-à-dire apte à être substituée aux milieux gélosés traditionnels. Il s'est révélé, en effet, que non seulement le végétal présente un état sanitaire excellent et un très bon développement du système racinaire, mais il suffit, pour assurer la croissance du végétal, de le déposer dans un contenant plus grand sans avoir à détacher le système racinaire du milieu dans lequel il s'est développé contrairement à la technique habituelle.

L'utilisation du milieu de culture selon l'invention comme milieu d'enracinement permet de supprimer la période d'adaptation du végétal passant du milieu stérile au milieu naturel et qui dure une dizaine de jours avec des conditions d'ambiance tout à fait particulières concernant la température, l'hygrométrie et la luminosité, ainsi que la protection des végétaux. En effet, au lieu du transfert traditionnel du végétal depuis son milieu gélosé d'enracinement dans un milieu naturel, le passage d'un milieu d'enracinement conforme à l'invention au milieu naturel se fera sans aucun problème car le végétal sera placé dans son nouvel environnement sans avoir à enlever du système racinaire le milieu d'enracinement dans lequel il s'est développé.

D'autre part, la réussite obtenue dans tous les essais réalisés jusqu'à maintenant est totale en ce sens qu'aucun cas de mortalité n'a été constaté, ce qui est tout à fait exceptionnel.

Le milieu selon l'invention présente aussi l'avantage substantiel d'être nettement moins coûteux que la gélose et beaucouo plus commode d'emploi.

Il est à noter que jusqu'à maintenant jamais aucun des divers substrats connus (par exemple tourbe, vermiculite, perlite, etc...) n'a pu être utilisé comme milieu de culture in vitro pour le développement en phase d'enracinement. En particulier à titre d'exemple, la tourbe blonde qui paraîtrait la mieux appropriée se révèle difficilement mouillable quand on rajoute le milieu et, non désinfectée suffisamment à 100°C, n'a jamais pu faire l'objet d'une utilisation en milieu enracinement.

La tourbe blonde est utilisée simplement en support à la sortie du milieu enracinement, c'est-à-dire dans les conditions ordinaires d'un support de culture.

Les fibres utilisées comme milieu de culture in vitro ont une densité sèche (à un taux d'humidité de 50 % environ) de l'ordre de 0,10 à 0,20.

Le substrat selon l'invention peut être utilisé tel quel à l'état brut, mais il peut aussi l'être en mélange avec divers matériaux de charge, du gravier par exemple de diamètre moyen de l'ordre de 4 à 6 mm et en proportion (en volume) variant entre environ 75 % et 50 %.

Avec un tel support on a expérimenté en bouturage classique diverses espèces végétales telles que le pommier, la vigne et le rosier.

Des boutures ont été élevées en pots et l'état physiologique des plantes s'est révélé remarquable, notamment l'intensité chlorophylliène (forte densité des chloroplastes) qui, de manière tout à fait inattendue, est très supérieure à ce que l'on constate ordinairement. Le développement du système racinaire a été excellent.

Cette forte intensité chlorophylliène et ce très bon développement du système racinaire doivent être attribués vraisemblablement, soit à une meilleure aération des racines due à la perméabilité du substrat de l'invention, soit à l'action de substances spécifiques à la fibre constitutive dudit substrat, ou encore à l'action combinée aération-substances.

On rappellera à ce propos que les tourbes ne sont pas satisfaisantes sur ce point car elles constituent un milieu asphyxiant du fait de leurs fibres trop courtes.

Par ailleurs, un tel support nécessite une alimentation légèrement plus fréquente que celle requise pour des supports classiques du type tourbe par exemple.

La charge peut aussi être, à titre d'exemple, des écorces broyées, notamment de résineux.

Le substrat peut ainsi comporter (en volume) entre 5 % et 50 % de fibres et entre 95 % et 50 % d'écorces en granules. Avantageusement les ecorces en granules sont un mélange d'éléments fins (quelques dixièmes de mm) en proportion (en volume) d'environ 1/4, d'éléments moyens (entre 1 et 5 mm) en proportion d'environ 1/2 et d'éléments grossiers (supérieurs à 5 mm) en proportion d'environ 1/4.

En floriculture par exemple le mélange aura de préférence entre 15 et 20 % de fibres contre 10 à 15 % pour la culture en pépinière.

Le milieu de culture selon l'invention présente donc des qualités et propriétés remarquables tant au point de vue physique qu'aux points de vue chimique et physiologique, faisant de lui un substrat idéal utilisable tel quel à l'état brut ou en mélange avec divers matériaux de charge, sans qu'il soit nécessaire d'effectuer des additions de substances organiques et/ou synthétiques.

D'une manière générale, le milieu de culture (seul ou avec une charge) selon l'invention ne présente aucune phytotoxicité. On sait que celle-ci peut provenir de différentes causes telles que le pH, la présence de substances initiales ou de décomposition inhibant le développement des plantes et la captation d'éléments minéraux dont la plante à besoin. Cette phytotoxicité se rencontre dans la plupart des substrats ou milieux de culture, à des degrés divers et est amendable ou non plus ou moins facilement et plus ou moins efficacement. Aucune de ces causes ne se rencontre dans le milieu de culture conforme à l'invention.

7

Les éventuels éléments phytotoxiques (terpènes et acides résiniques notamment) des bois de pins (dans le cas où les fibres seraient fabriquées à partir d'essences résineuses) sont éliminés soit au cours du traitement d'obtention des fibres, soit avant ce traitement par décomposition-oxydation au cours du stockage préalable des copeaux ou délignures servant de matière première.

Des expériences ont montré une absence totale de substances phytotoxiques lors de l'arrosage répété de plantes à l'aide d'un jus de marinage concentré de fibres selon l'invention, sans aucun dommage pour les plantes.

Le milieu de l'invention est parfaitement compatible avec les solutions nutritives adaptées aux diverses plantes sans aucune réaction susceptible de nuire à la conservation et à la croissance des plantes.

En outre, un tel milieu est d'un coût de revient tout particulièrement économique en comparaison avec ceux des supports de culture hors-sol actuellement utilisés et notamment la vermiculite et la perlite.

Enfin, l'invention n'est évidemment pas limitée aux exemples de réalisation donnés ci-dessus, mais en couvre au contraire toutes les variantes sans sortir pour autant du cadre de l'invention. C'est ainsi que le milieu de culture selon l'invention peut également être utilisable en compost ou en amendement par exemple par incorporation dans le sol naturel seul ou en mélange avec d'autres matériaux.

**Revendications**

1. Utilisation comme milieu de culture pour plantes de fibres de bois obtenues par un traitement connu en soi consistant à cuire à la vapeur d'eau des copeaux de bois, puis à les défibrer en présence de vapeur d'eau sous pression et, enfin, à égoutter le mélange eau-fibres ainsi obtenu, lesdites fibres de bois étant formées de filaments ou fibrilles individuels, foisonnants, non agglomérés ni compressés.

2. Utilisation selon la revendication 1, caractérisée en ce que le milieu de culture est constitué de fibres présentant les caractéristiques dimensionnelles suivantes: diamètre de quelques centièmes de millimètre et longueur comprise entre 1 et 5 mm.

3. Utilisation selon la revendication 1 ou 2, caractérisée en ce que le milieu de culture est constitué de fibres présentant les caractéristiques physiques et chimiques principales suivantes:

| | |
|---|---|
| Porosité | : entre 70 % et 98 % |
| Teneur en eau à pFI | : entre 30 % et 40 % |
| Tencur en air à pFI | |
| | : entre 55 % et 70 % |
| Rétention de l'eau | : entre 550 % et 800 % |
| Densité sèche | : entre 0,05 et 0,15 |

4. Utilisation selon l'une des revendications 1 à 3, caractérisée en ce que les fibres du milieu sont utilisée en mélange avec un matériau complémentaire de charge.

5. Utilisation suivant la revendication 4, caracterisée en ce que le matériau de charge est du gravier de diamètre moyen compris entre 4 et 6 mm et en proportion en volume de 50 à 75 %.

6. Utilisation suivant la revendication 4, caractérisée en ce que le matériau de charge est constitué par des écorces broyées, notamment de résineux, en proportion en volume de 50 à 95 %.

7. Utilisation suivant la revendication 6, caractérisée en ce que les écorces broyées sont constituées de 1/4 en volume de granules fins de quelques dixièmes de mm, 1/2 de granules moyens entre 1 et 5 mm, et 1/4 de granules grossiers supérieurs à 5 mm.

8. Utilisation selon la revendication 1, plus particulièrement destinée à la culture in vitro en phase enracinement, les fibres étant utilisées à l'état brut sans aucun apport complémentaire à des fins d'amélioration des qualités ou propriétés physiques, chimiques ou physiologiques.

**Patentansprüche**

1. Verwendung als Kultursubstrat für Pflanzen von Holzfasern, die durch eine an sich bekannte Behandlung erhalten werden, die darin besteht, daß Holzspäne mit Wasserdampf gekocht, danach in Anwesenheit von unter Druck befindlichem Wasserdampf zerfasert und schließlich die auf diese Weise erhaltene Mischung aus Wasser und Fasern entwässert wird, wobei die besagten Holzfasern individuelle, gequollene Filamente oder Fibrillen bilden, die weder agglomeriert noch komprimiert sind.

2. Verwendung gemäß Anspruch 1, dadurch gekennzeichnet, daß das Kultursubstrat aus Fasern gebildet wird, die folgende dimensionellen Eigenschaften besitzen: Durchmesser einige Zehntel Millimeter und Länge zwischen 1 und 5 mm.

3. Verwendung gemäß Anspruch 1 oder 2, dadurch gekennzeichnet, daß das Kultursubstrat aus Fasern gebildet wird, die folgende physikalischen und chemischen Haupteigenschaften aufweisen:

| Porosität | zwischen 70 % und 98 % |
| Gehalt an Wasser bei pF1 | zwischen 30 % und 40 % |
| Gehalt an Luft bei pF1 | zwischen 55 % und 70 % |
| Wasserzurückhaltung | zwischen 550 % und 800 % |
| Trockensubstanzdichte | zwischen 0,05 und 0, 15 |

4. Verwendung gemäß einem der Ansprüche 1 bis 3, dadurch gekennzeichnet, daß die Fasern des Substrats in Mischung mit einem ergänzenden Füllmaterial verwendet werden.

5. Verwendung gemäß Anspruch 4, dadurch gekennzeichnet, daß das Füllmaterial grober Sand mit einem mittleren Teilchendurchmesser zwischen 4 und 6 mm und in einem Volumenanteil von 50 bis 75 % ist.

6. Verwendung nach Anspruch 4, dadurch gekennzeichnet, daß das Füllmaterial durch zerkleinerte, insbesondere harzige Rinde in einem Volumenanteil von 50 bis 95 % gebildet wird.

7. Verwendung nach Anspruch 6, dadurch gekennzeichnet, daß die zerkleinerte Rinde gebildet wird aus 1/4 an Volumen aus feinen Teilchen von einigen Zehntel von mm, 1/2 aus mittleren Teilchen zwischen 1 und 5 mm und 1/4 aus großen Teilchen größer als 5 mm.

8. Verwendung gemäß Anspruch 1, insbesondere bestimmt zur in vitro-Kultur in der Bewurzelungsphase, wobei die Fasern im Rohzustand ohne irgendwelchen ergänzenden Zusatz zur Verbesserung von physikalischen, chemischen oder physiologischen Qualitäten oder Eigenschaften verwendet werden.

## Claims

1. Use of wood fibes as a culture medium for plants, this being obtained by a treatment known in the art, in which wood shavings are steam heated, then pulped by steam under pressure, after which the obtained water-fibre mix is drained, the said wood fibres being formed from individual, separate filaments or fibrils which have not been compressed or agglomerated.

2. Use as claimed in claim 1, characterized in that the culture medium consists of fibres with the following dimensions:
several hundredths of a millimetre in diameter and between 1 and 5 millimetres in length.

3. Use as claimed in claims 1 or 2, characterized in that the culture medium consists of fibres with the following physical and chemical properties:

| Porosity | between 70 % and 98 % |
| Water content at pF1 | between 30 % and 40 % |
| Air content at pF1 | between 55 % and 70% |
| Water retention | between 550 % and 800 % |
| Dry density | between 0.05 % and 0.15 % |

4. Use as claimed in any one of claims 1 to 3, characterized in that the fibres of the medium are used in a mixture with a filler material.

5. Use as claimed in claim 4, characterized in that the filler material is formed of gravel with an average diameter of between 4 and 6 mm, in the proportion of from 50 to 75 % by volume.

6. Use as claimed in claim 4, characterized in that the filler material is formed of crushed, preferably resinous bark, in the proportion of from 50 to 95 % by volume.

7. Use as claimed in claim 6, characterized in that crushed bark is made up of a mixture of the following proportions: 1/4 by volume of fine granules, several tenths of a mm in size; 1/2 of average-size granules of between 1 and 5 mm; 1/4 of large granules above 5 mm in size.

8. Use as claimed in claim 1, specifically designed for in vitro culture at the rooting stage, the fibres being used in the raw state, without any attempt being made to improve their physical, chemical or physiological properties or characteristics.